# FASCICULE DE BREVET EUROPEEN

(11) **EP 1 144 300 B1**
(45) Date de publication et mention de la délivrance du brevet: **08.01.2003**
(21) Numéro de dépôt: 99941734.8
(22) Date de dépôt: 10.09.1999
(51) Int. Cl.: C01B 25/16

(54) **PROCEDE POUR CONFINER LE PLUTONIUM DANS DES CERAMIQUES APATITIQUES ET PRODUITS OBTENUS PAR CE PROCEDE**
VERFAHREN ZUR EINDÄMMUNG VON PLUTONIUM IN APATIT- KERAMIK UND DARAUS HERGESTELLTE PRODUKTE
METHOD FOR CONFINING PLUTONIUM IN APATITE CERAMICS AND RESULTING PRODUCTS

(30) Priorité: 11.09.1998 FR 9811334
(43) Date de publication de la demande: 17.10.2001
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: CARPENA, Jo[lle, F-13490 Jouques (FR); BOYER, Laurent, F-05000 Gap (FR); LACOUT, Jean-Louis, F-31000 Toulouse (FR)
(74) Mandataire: Audier, Philippe André
(86) Numéro de dépôt international: FR9902157
(87) Numéro de publication internationale: WO00015546

(56) Documents cités:
- WO-A-95/02886

## Description

### Domaine technique

La présente invention a pour objet un procédé pour confiner le plutonium dans des céramiques apatitiques et les produits obtenus par ce procédé.

De façon plus précise, elle concerne un procédé pour fixer le plutonium sous forme d'atomes dans une phase minérale céramisée fournissant un matériau de confinement durable.

Avec la fin de la guerre froide, la signature du traité de non-prolifération d'armes nucléaires et l'arrêt des essais nucléaires, certains pays disposent d'une grande quantité de plutonium qu'il faut savoir stocker.

Le plutonium est un radioélément à vie longue (Pu-239 : T = 24390 ans) d'où la nécessité de développer des matrices de conditionnement extrêmement stables. Pour éviter les problèmes de criticité, la matrice doit empêcher la diffusion atomique du plutonium pour éviter qu'il se concentre sous forme d'amas.

Le but de cette invention est de fournir un procédé de préparation d'une matrice de confinement destinée au stockage du plutonium, dont la durabilité et la stabilité à long terme sont confirmées par l'existence de britholites naturelles (réacteur « naturel » d'OKLO) renfermant des actinides à vie longue.

### État de la technique antérieure

On a déjà envisagé de conditionner des déchets radioactifs dans des apatites silicatées, comme il est décrit dans le document WO-A-95/02886 [1]. Dans ce document, les déchets radioactifs conditionnés peuvent être des lanthanides et des actinides.

Comme il est indiqué dans ce document, l'emploi d'apatite phosphosilicatée est très intéressant car les apatites possèdent les propriétés remarquables suivantes :
- ces structures sont très stables chimiquement et thermiquement dans le milieu naturel. Il existe d'ailleurs des apatites silicatées naturelles contenant des actinides depuis des centaines de millions d'années.
- Les apatites ont une solubilité très faible dans l'eau ; de plus, leur solubilité diminue lorsque la température augmente, ce qui est un point positif pour le conditionnement des actinides car leur haute activité va impliquer une augmentation de la température dans la matrice qui les contiendra.
- Les structures apatitiques sont capables de résister à la radioactivité car les dégâts d'irradiation qu'elles subissent sont instables à une température supérieure à 60°C. L'apatite possède en effet la propriété de se restructurer à des températures supérieures à 60°C.
- Les structures apatitiques ont la propriété très intéressante de pouvoir intégrer dans leur structure de nombreux éléments métalliques, en particulier les actinides et les lanthanides.

On peut représenter les apatites naturelles sous la formule suivante :

Ca₁₀(PO₄)₆F₂

qui correspond à la structure de la fluoroapatite. Mais dans cette structure, on peut réaliser de nombreuses substitutions, en particulier remplacer les cations Ca²⁺ par divers éléments métalliques tels que les lanthanides, les actinides et les métaux alcalins, substituer les ions PO₄³⁻ par d'autres anions tels que SiO₄⁴⁻, et substituer également les anions F⁻ par des anions S²⁻, Cl⁻, Br⁻, I⁻, ou OH⁻.

Les formulations utilisées dans ce document sont du type :

Mₜ Caₓ Ln_{y} A_{z}(PO₄)ᵤ (SiO₄)₆₋ᵤ X

avec
M = un métal acalin,
Ln = Y ou un lanthanide,
A = un actinide
X = S²⁻, 2F⁻, 2Cl⁻, 20H⁻, 2Br⁻ ou 2I⁻.
0 ≤ t ≤ 3,
0 < u < 6,
0 < x ≤ 10,
0 ≤ y < 10
0 < z ≤ 7, et
y + z > 0

Ces formulations d'apatites peuvent renfermer beaucoup d'ions SiO₄⁴⁻, donc peu d'ions PO₄³⁻, et de ce fait présentent une moins bonne « auto-guérison » à l'irradiation du rayonnement α émis par le Pu. En effet, les tétraèdres phosphatés sont plus rigides que les tétraèdres formés par les silicates.

Par ailleurs, le procédé de fabrication de ces apatites nécessite l'utilisation d'un excès de CaF₂, par exemple un excès de 10 % par rapport à la quantité stoechiométrique nécessaire pour obtenir l'apatite fluorée, et plusieurs étapes de calcination avec des broyages intermédiaires pour obtenir l'apatite fluorée.

Lorsque l'on veut obtenir une céramique dense, on soumet ensuite la poudre obtenue après les étapes de calcination à un frittage, par exemple un frittage par compression à chaud. Ce procédé nécessite donc de nombreuses étapes de calcination suivies d'un frittage pour parvenir à l'obtention d'une céramique dense.

La présente invention a précisément pour objet de nouvelles formulations d'apatites phosphosilicatées, adaptées au confinement du plutonium, et un procédé de préparation de ces apatites sous forme de céramique dense plus facile à mettre en oeuvre.

### Exposé de l'invention

Ainsi, l'invention a pour objet un bloc de confinement du plutonium comprenant une matrice d'apatite phosphosilicatée contenant le plutonium à confiner et éventuellement des lanthanides radioactifs, le plutonium et les lanthanides étant inclus dans la structure chimique de l'apatite phosphosilicatée et cette apatite répondant à la formule suivante :

Mₜ Caₓ Ln_{y} Hf_{w} Pu_{z-w}(PO₄)₆₋ᵤ(SiO₄)ᵤ F₂ (I)

dans laquelle :
- M représente au moins un métal alcalin ;
- Ln représente au moins un cation choisi parmi les lanthanides, et
- t, x, y, z, w et u sont tels que :

0 ≤ t ≤ 1,
8 ≤ x ≤ 10,
0 ≤ y ≤ 1,
0 < z ≤ 0,5,
0 ≤ w < z, et
0 < u ≤ y + 2z,
et que le nombre total de charges positives apportées par les cations M, Ca, Ln, Hf et Pu soit égal à (20 + u).

Selon l'invention, dans l'apatite phosphosilicatée répondant à la formule (I) donnée ci-dessus, on peut faire varier les quantités de plutonium, et de cation Ln, Hf et M dans des limites relativement faibles par rapport à la teneur x en calcium de l'apatite, qui est de 8 à 10.

De même, sur les sites tétraédriques (PO₄ et SiO₄), il est possible de faire varier le rapport SiO₄/PO₄. Chaque substitution a une influence sur les propriétés physico-chimiques de la matrice de conditionnement et c'est le choix particulier de la formulation qui donne à la matrice des propriétés physico-chimiques spécifiques. Le rapport SiO₄/PO₄ contrôle notamment la résistance à la lixiviation et la tenue à l'irradiation. Il est donc nécessaire d'ajuster ce rapport en fonction de la quantité de plutonium introduite. C'est pourquoi, selon l'invention, la quantité de SiO₄ ne peut excéder la valeur y + 2z, qui correspond aux quantités de cations Ln et Pu présentes dans l'apatite phosphosilicatée.

Dans la formule (I) donnée ci-dessus, le nombre total de charges négatives est apporté par les anions PO₄³⁻, SiO₄⁴⁻ et F⁻. Ces charges sont équilibrées par le cation monovalent M, le cation divalent Ca et les cations trivalents et tétravalents qui peuvent être des lanthanides, Hf et Pu.

Pour que l'équilibre des charges soit respecté, les quantités t, x, y, w et z sont choisies en fonction de la quantité (6-u) des anions PO₄³⁻ et de l'état de valence des cations Ln, Hf et du Pu présents pour obtenir la neutralité. De ce fait, ces quantités peuvent être ou non des nombres entiers.

Le métal alcalin utilisé dans cette apatite peut être n'importe quel métal alcalin. On choisit avantageusement Na et K pour leur facilité d'emploi. Les lanthanides peuvent être n'importe quel lanthanide de La à Gd. Ils peuvent être radioactifs ou non. Le choix du cation Ln est important car il permet de substituer l'apatite par un produit neutrophage tel que Gd, pour diminuer les risques de criticité.

Selon l'invention, le bloc de confinement peut être constitué uniquement de l'apatite phosphosilicatée contenant Pu, qui de préférence, ne contient pas de métal alcalin. Toutefois, on peut aussi disposer autour de cette matrice d'apatite contenant le plutonium à conditionner, au moins une couche d'apatite silicatée non active et éventuellement d'autres couches d'apatite silicatée ou non, de composition différente, de façon à constituer des barrières successives appropriées entre le plutonium et l'environnement.

Dans préférence, les apatites phosphosilicatées du bloc et/ou des couches les plus internes directement en contact avec le plutonium, ne contiennent pas de métal alcalin pour mieux résister aux dégâts d'irradiation, et les couches les plus externes peuvent être choisies pour résister aux agressions du milieu extérieur. On peut utiliser pour une ou plusieurs couches la composition de la fluorapatite Ca₁₀(PO₄)₆F₂ qui est particulièrement résistante.

Par ailleurs, on choisit les couches de façon à améliorer les propriétés mécaniques de l'ensemble.

Selon un premier mode de réalisation de l'invention, la formulation de l'apatite phosphosilicatée est telle que le nombre de silicates est égal au nombre de Pu dans la maille cristallographique, l'apatite ne comportant pas de cations Ln. Dans ce cas, l'apatite phosphosilicatée peut répondre à la formule suivante :

Na_{z} Ca_{10-2z} Pu_{z} (PO₄)_{6-z} (SiO₄)_{z} F₂ (II)

dans laquelle 0 < z ≤0,5

A titre d'exemple d'une telle apatite phosphosilicatée, on peut citer celle répondant à la formule :

Na_{0,45} Ca_{9,1} Pu_{0,45} (PO₄)_{5,55} (SiO₄)_{0,45} F₂ (III).

Selon un second mode de réalisation de l'invention, on choisit une apatite phosphosilicatée dans laquelle le rapport PO₄/SiO₄ est égal à 5, et les teneurs en cations Ca et Ln sont choisies en fonction de la quantité de Pu introduite pour satisfaire la condition de neutralité de l'apatite phosphosilicatée. Dans ce second mode de réalisation de l'invention, l'apatite phosphosilicatée peut répondre à la formule :

Ca_{9+z} Gd_{1-2z} Hf_{w} Pu_{z-w} (PO₄)₅ (SiO₄)₁ F₂ (IV)

avec 0 < z ≤ 0,5 et 0 ≤ w < z.

A titre d'exemple d'une telle apatite phosphosilicatée, on peut citer celle répondant à la formule :

Ca_{9,46} Gd_{0,08} Pu_{0,46} (PO₄)₅ SiO₄ F₂ (V).

Selon un troisième mode de réalisation de l'invention, la formulation de l'apatite phosphosilicatée prend en compte des critères de criticité qui peuvent être contrôlés par la quantité d'un élément à forte section efficace de capture de neutrons comme le gadolinium. La proportion de Gd introduite est alors ajustée au risque de criticité et non choisie en fonction de la quantité de plutonium, comme dans le second mode de réalisation de l'invention. Ce cas particulier d'introduction d'un élément trivalent associé au plutonium sera d'autant plus intéressant pour le plutonium d'origine militaire puisque ce dernier est alors en présence de gadolinium. Dans ce cas, l'apatite phosphosilicatée peut répondre à la formule :

Ca_{10-y-z} Gd_{y} Hf_{w} Pu_{z-w} (PO₄)_{6-2z-y} (SiO₄)_{y+2z} F₂ (VI)

avec 0 < y ≤ 1, 0 < z ≤ 0,5 et 0 ≤ w < z.

A titre d'exemple d'une telle apatite phosphosilicatée, on peut citer celle répondant à la formule :

Ca_{9,04} Gd_{0,48} Pu_{0,48} (PO₄)_{4,56} (SiO₄)_{1,44} F₂ (VII).

Selon un quatrième mode de réalisation de l'invention, l'apatite phosphosilicatée comprend uniquement du plutonium et du calcium, le Pu se substituant au calcium. Dans ce cas, l'apatite phosphosilicatée peut répondre à la formule suivante :

Ca_{10-z} Pu_{z} (PO₄)_{6-2z} (SiO₄)_{2z} F₂ (VIII)

avec 0 < z ≤ 0,5.

A titre d'exemple d'une telle apatite, on peut citer celle répondant à la formule

Ca_{9,55} Pu_{0,45} (PO₄)_{5,1} (SiO₄)_{0,9} F₂ (IX).

Les apatites phosphosilicatées de formule (I) utilisées dans l'invention peuvent être préparées à partir de poudre des constituants sous la forme d'oxyde, de phosphate, de carbonate, de fluorure, d'halogénure, de sulfure, d'hydroxyde, ou encore de silicate.

Aussi, l'invention a également pour objet un procédé de préparation d'une apatite phosphosilicatée de formule :

Mₜ Caₓ Ln_{y} Hf_{w} Pu_{z-w}(PO₄)₆₋ᵤ(SiO₄)ᵤ F₂ (I)

dans laquelle :
- M représente un métal alcalin ;
- Ln représente au moins un cation choisi parmi les lanthanides, et
- t, x, y, z, w et u sont tels que :

0 ≤ t ≤ 1,
8 ≤ x ≤ 10,
0 ≤ y ≤ 1,
0 ≤ w < z,
0 < z ≤ 0,5, et
0 < u < y + 2z,
et que le nombre total de charges positives apportées par les cations Na, Ca, Ln, Hf et Pu soit égal à (20 + u), à partir d'un mélange de poudres comprenant les réactifs suivants : du dioxyde de plutonium, du pyrophosphate de calcium, des composés des différents constituants de l'apatite à préparer et au moins un réactif fluoré, selon lequel on effectue les étapes suivantes :
1) préparation d'un premier mélange de poudres comprenant tous les réactifs à l'exception du (des) réactif(s) fluoré(s) ;
2) addition au premier mélange du (des) réactif(s) fluoré(s) pour obtenir un mélange final de tous les réactifs ;
3) broyage du mélange final à une granulométrie inférieure à 50 µm ;
4) frittage-réaction du mélange final, à une température de 1100 à 1600°C, sous une atmosphère neutre ou réductrice, avec application d'une pression avant ou pendant le frittage.

Pour mettre en oeuvre le procédé de l'invention, on utilise avantageusement dans l'étape 2) des quantités de réactif(s) fluoré(s) correspondant aux proportions stoechiométriques nécessaires pour obtenir l'apatite phosphosilicatée de formule (I).

Ainsi, avec le procédé de l'invention, notamment en raison de la préparation du mélange de poudres en deux étapes, on peut obtenir une incorporation totale du fluor lors de l'étape de frittage-réaction et obtenir ainsi une céramique dense homogène dans laquelle le plutonium est immobilisé.

Selon l'invention, on part avantageusement de pyrophosphate de calcium Ca₂P₂O₇ sous la forme β que l'on obtient par calcination d'hydrogénophosphate de calcium anhydre ou dihydraté (CaHPO₄ ou CaHPO₄.2H₂O), à environ 1 000°C, pendant 1 à 2 heures, car il est plus facile de vérifier sa pureté sous cette forme.

Le plutonium est introduit sous la forme d'oxyde de plutonium que l'on broie seul pour obtenir une poudre ayant une granulométrie moyenne de 2 à 50 µm, par exemple une granuiométrie d'environ 10 µm. Ce broyage très fin de l'oxyde de plutonium permet d'avoir dans la céramique finale une répartition en plutonium la plus homogène possible. Par ailleurs, les quantités broyées empêchent d'atteindre la criticité.

Après préparation de ces deux poudres, on pèse les réactifs dans des proportions stoechiométriques, et on mélange tous les réactifs à la poudre de PuO₂ en réalisant les étapes 1 et 2 du procédé de l'invention, pour introduire le(s) réactifs fluoré(s) en dernier.

La première étape peut être effectuée en mélangeant tous les réactifs en poudre à l'exception des réactifs fluorés tels que fluorures de calcium, de gadolinium et/ou de plutonium, à la poudre de PuO₂, dans un liquide servant de lubrifiant et d'homogénéisateur tel que l'eau, un alcool ou de l'acétone. D'autres liquides peuvent convenir à condition qu'ils puissent s'évaporer et ne laissent pas de résidu. La quantité de liquide est telle que le mélange de réactifs est largement recouvert. Le mélange s'effectue jusqu'à ce que le liquide, par exemple l'acétone, soit évaporé. Puis le résidu est mis à sécher dans une étuve aux environs de 100°C pour avoir une évaporation totale de l'acétone. Ensuite le résidu est broyé afin d'obtenir une poudre présentant une bonne homogénéité et une granulométrie inférieure à 50 µm.

Lorsque le mélange de poudres ajouté à PuO₂ comprend du carbonate de calcium, on soumet le premier mélange obtenu dans la première étape, à un traitement thermique de décomposition du carbonate de calcium avant d'ajouter les réactifs fluorés. Ce traitement thermique peut consister en un chauffage pendant 1 à 2 heures à 900°C.

Dans la seconde étape, on ajoute les réactifs fluorés pulvérulents à la poudre ayant subi le traitement thermique. Pour cela, les deux poudres sont mélangées, par exemple dans de l'acétone (en quantité suffisante pour recouvrir le mélange) jusqu'à évaporation de cette dernière. Par la suite, le mélange réactionnel est mis à l'étuve pour éliminer l'acétone résiduelle à une température ne dépassant pas 120°C pour éviter tout risque de volatilisation des produits fluorés.

On réalise ensuite l'étape 3) du procédé de l'invention qui consiste en un broyage du mélange de poudres à une granulométrie inférieure à 50 µm. Ce broyage peut être effectué en présence d'eau distillée en ajoutant par exemple 50 % en masse d'eau distillée au mélange de poudres comprenant tous les réactifs. Le mélange est par la suite broyé dans des jarres en ZrO₂ pendant une vingtaine de minutes avec une vitesse d'environ 1100 tours/minute. Après un séchage en étuve d'environ 2 heures à une centaine de degrés, la poudre est tamisée pour s'assurer de ne pas avoir de particules de plus de 50 µm.

La quatrième étape de frittage-réaction peut être effectuée de deux façons différentes selon que l'on applique la pression avant ou pendant le frittage.

Selon un premier mode de réalisation de cette étape de frittage-réaction, on effectue les étapes suivantes :
- a) comprimer le mélange de poudres dans un moule sous une pression de 100 à 500 MPa (1000 à 5000 bars), et
- b) calciner le produit comprimé, sous atmosphère neutre ou réductrice, à la pression atmosphérique, à une température de 1 500 à 1 600°C.

Dans ce cas, la poudre de réactif obtenue dans l'étape 3) est compactée, par exemple dans un moule cylindrique d'une dizaine de millimètre de diamètre, avec des pressions s'échelonnant de 100 à 500 MPa(1 000 à 5 000 bars).

Ce compactage est nécessaire pour améliorer la réactivité de la poudre en mettant les grains en contact. De préférence, la pression est appliquée lentement pour ne pas emprisonner de l'air et un palier de 15 minutes lorsqu'on atteint les 2/3 de la pression finale, peut être envisagé. Les pastilles obtenues après compactage sont calcinées dans un four tubulaire permettant de travailler en milieu neutre (azote par exemple) ou réducteur (par exemple un mélange d'argon et de 5 % d'hydrogène). La calcination s'effectue à haute température (entre 1500°C et 1600°C) avec des durées s'étalant de. 2 à 20 heures selon la quantité de plutonium à incorporer (de 1 à 10 % en masse). La vitesse de montée et descente en température peut varier de 5 à 50°C par minute selon les capacités du four. La synthèse de l'apatite et le frittage se font en une seule étape, ce qui limite la volatilisation du fluor, et les hautes températures utilisées permettent d'obtenir des céramiques très homogènes.

Ainsi, cette étape de frittage-réaction permet d'obtenir une céramique dense sans qu'il soit nécessaire d'effectuer plusieurs cycles de calcination entrecoupés de broyages comme dans le document [1], et sans terminer le traitement par un frittage sous pression.

Selon un second mode de réalisation de l'étape 4) de frittage-réaction, on fritte le mélange de poudres en atmosphère neutre ou réductrice, sous une pression de 10 à 25 MPa (100 à 250 bars) à une température de 1100 à 1500°C.

Ce frittage-réaction peut être complété si nécessaire pour améliorer encore l'homogénéité de la matrice, par un traitement complémentaire comprenant les étapes suivantes :
- c) broyage du produit fritté obtenu,
- d) compactage du produit broyé sous une pression de 100 à 500 MPa (1000 à 5000 bars), et
- e) traitement thermique de recuit du produit compacté, à la pression atmosphérique, sous atmosphère neutre ou réductrice, à une température de 1200 à 1600°C.

A titre d'exemple, on peut réaliser ces différentes étapes de la façon suivante.

Le mélange de poudres des réactifs obtenu dans l'étape 4) est compacté dans un moule en graphite à température ambiante avec une pression de 10 à 30 MPa (100 à 300 bars).

Un premier palier en température (entre 600° et 800°C) est atteint à raison de 5 à 50°C/minute sans pression pour éviter à l'air d'être emprisonné. La pression n'est appliquée qu'à la fin du palier d'une quinzaine de minutes et ce jusqu'à la fin du palier final (entre 1 100°C et 1 500°C). La durée du palier, pendant laquelle la pression est appliquée, dépend de la température (entre 1 heure et 12 heures) et de la quantité de plutonium (1 à 10 % massique).

Si nécessaire, la pastille obtenue peut ensuite être broyée et remise en forme par compactage avec une pression de 100 à 500 MPa (1000 à 5000 bars). La pastille ainsi obtenue subit à nouveau une calcination ou recuit pour améliorer la répartition du Pu dans la matrice. Le recuit, à pression atmosphérique, se fait à une température de 1200°C à 1600°C, en atmosphère neutre ou réductrice, pour une durée de 2 à 20 heures selon la température. Plus la température de frittage-réaction est importante et moins longue sera la durée du recuit nécessaire pour obtenir une céramique apatitique homogène.

D'autres caractéristiques et avantages de l'invention apparaîtront mieux à la lecture des exemples suivants, donnés bien entendu à titre illustratif et non limitatif.

### Exposé détaillé des modes de réalisation

Les exemples qui suivent illustrent la préparation d'apatites phosphosilicatées correspondant aux quatre modes de réalisation de l'invention.

Dans tous ces exemples, on utilise le procédé de l'invention pour préparer ces apatites phosphosilicatées en partant des réactifs suivants : CaF₂, SiO₂, Ca₂P₂O₇, CaCO₃ et PuO₂ avec éventuellement Na₂CO₃, GdF₃ et/ou Gd₂O₃.

### Exemple 1 : Synthèse d'une apatite phosphosilicatée de formule : Ma_{0,45} Ca_{9,1} Pu_{0,45} (PO₄)_{5,55} (SiO₄)_{0,45} F₂ (III).

Pour obtenir 10 g de britholite répondant à la formule donnée ci-dessus, on prépare tout d'abord un premier mélange dans l'acétone en utilisant les quantités suivantes de réactifs :
- CaCO₃ : 2,3405 g
- PuO₂ : 1,1307 g
- SiO₂ : 0,2479 g
- Ca₂P₂O₇ : 6,4662 g, et
- Na₂CO₃ : 0,2187 g

Tous les réactifs, sauf CaF₂ sont mélangés dans de l'acétone et séchés à l'étuve à 100°C pendant 1 heure. Ils sont ensuite broyés pour obtenir une granulométrie de 50 µm et calcinés 1 à 2 heures à 900°C. pour décomposer les carbonates. Après refroidissement, on ajoute 0,7160 g de CaF₂, et les deux poudres sont à nouveau mélangées dans de l'acétone. Après évaporation totale de l'acétone en étuve à 100°C (une trentaine de minutes), on fait un broyage avec 50 % en masse d'eau distillée dans des jarres en ZrO₂ pour obtenir une poudre d'une granulométrie de 10 µm. La poudre de réactifs est alors compactée jusqu'à 400 MPa (4000 bars) avec l'application d'une pression lente et progressive (20 MPa/min ; 200 bars/min). Ceci permet d'augmenter la conductivité thermique de la poudre et la calcination en sera affectée. Le temps de réaction pour une température et une pression données sera diminué.

La pastille obtenue est alors calcinée à 1500°C pendant 6 heures sous atmosphères d'azote. Dans ces conditions, il n'y a pas de perte de fluor par volatilisation pendant le frittage réactif.

### Exemple 2 : Synthèse de l'apatite de formule : Ca_{9,46} Gd_{0,08} Pu_{0,46} (PO₄)₅ (SiO₄)₁ F₂ (V).

Dans ce cas, on suit le même mode opératoire que dans l'exemple 1, mais les réactifs utilisés pour la préparation du premier mélange sont présents dans les proportions suivantes :
- CaCO₃ : 2,7945 g
- PuO₂ : 1,1425 g
- SiO₂ : 0,5446 g
- Ca₂P₂O₇ : 5,7585 g, et
- Gd₂O₃ : 0,4804 g

Après traitement thermique pour décomposer le carbonate de calcium, on ajoute 0,7078 g de CaF₂ et on effectue le mélange final des poudres, puis le frittage-réaction, comme dans l'exemple 1.

On obtient ainsi une céramique dense homogène contenant du plutonium et du gadolinium.

### Exemple 3 : Synthèse de l'apatite de formule : Ca_{9,04} Gd_{0,48} Pu_{0,48} (PO₄)_{4,56} (SiO₄)_{1,44} F₂ (VII)

Pour obtenir 10 g de britholite correspondant à cette formule, on utilise pour préparer le premier mélange les réactifs suivants dans les proportions suivantes :
- CaCO₃ : 3,0089 g
- PuO₂ : 1,1361 g
- SiO₂ : 0,7474 g
- Ca₂P₂O₇ : 5,0047 g, et
- Gd₂O₃ : 0,7515 g

On mélange tous ces réactifs dans de l'acétone et on les sèche à l'étuve comme dans l'exemple 1. On les broie ensuite pour obtenir une granulométrie d'environ 50 µm et on porté le mélange à 900°C pour décomposer les carbonates. Après refroidissement, on ajoute 0,6745 g de CaF₂ et on effectue le mélange final et le broyage comme dans l'exemple 1.

La poudre obtenue est mise en forme dans un moule en carbone à l'aide d'un piston, puis le moule est chauffé par induction. On applique une pression de 25 MPa à la fin d'un palier de 15 minutes à 700°C, et on poursuit la calcination à une température de l'ordre de 1100°C pendant une heure en appliquant une pression de 25 MPa. Si l'homogénéité de la matrice n'est pas satisfaisante, la pastille subit un broyage fin, puis un recuit à très haute température (1600°C) en atmosphère neutre sans que l'on risque de perdre du fluor.

### Exemple 4 : Synthèse de l'apatite de formule : Ca_{9,55} Pu_{0,45} (PO₄)_{5,1} (SiO₄)_{0,9} F₂ (IX).

Dans cet exemple, on suit le même mode opératoire que dans l'exemple 3 en utilisant les quantités de réactifs suivantes :
- CaCO₃ : 3,1481 g
- PuO₂ : 1,1241 g
- SiO₂ : 0,4930 g
- Ca₂P₂O₇ : 5,9073 g, et
- CaF₂ : 0,7118 g

Le produit obtenu à la suite du frittage sous pression est une céramique dense, homogène dans laquelle tout le fluor est incorporé.

On précise que la meilleure incorporation du fluor dans le procédé de l'invention est due à l'emploi d'une atmosphère neutre ou réductrice qui ne favorise pas les échanges fluor-oxygène, et par le fait que la synthèse et la densification ne se font qu'en une seule étape à haute température.

Les céramiques denses ainsi obtenues sont plus homogènes car les températures de calcination et/ou de recuit sont plus élevées. Ces deux améliorations apportées au procédé décrit dans le document [1] améliorent considérablement le conditionnement du plutonium.

En plus des propriétés intrinsèques apportées par la présente invention, des propriétés de confinement supplémentaire sont apportées par le fait que les produits obtenus se présentent sous la forme de monolhites denses, ce qui réduit la surface d'échange pour la lixiviation.

Par ailleurs, selon l'invention il est possible d'ajouter un produit neutrophage tel que du Hf ou un poison neutronique tel que Gd, à la matrice de confinement sous forme de micro inclusions ou en substitution pour diminuer les risques de criticité.

### Référence citée

[1] : WO-A-95/02886.

## Revendications

1. Bloc de confinement du plutonium comprenant une matrice d'apatite phosphosilicatée contenant le plutonium à confiner et éventuellement des lanthanides radioactifs, le plutonium et les lanthanides étant inclus dans la structure chimique de l'apatite phosphosilicatée et cette apatite répondant à la formule suivante :
Mₜ Caₓ Ln_{y} Hf_{w} Pu_{z-w}(PO₄)₆₋ᵤ(Si0₄)ᵤ F₂ (I)
dans laquelle :
- M représente au moins un métal alcalin ;
- Ln représente au moins un cation choisi parmi les lanthanides, et
- t, x, y, z, w et u sont tels que :
0 ≤ t ≤ 1,
8 ≤ x ≤ 10,
0 ≤ y ≤ 1,
0 < z ≤ 0,5,
0 ≤ w < z, et
0 < u ≤ y + 2z,
et que le nombre total de charges positives apportées par les cations M, Ca, Ln, Hf et Pu soit égal à (20 + u).

2. Bloc selon la revendication 1, dans lequel l'apatite phosphosilicatée répond à la formule :
Na_{z}Ca _{10-2z} Pu_{z} (PO₄)_{6-z} (SiO₄)_{z} F₂ (II)
dans laquelle 0 < z ≤ 0,5.

3. Bloc selon la revendication 1, dans lequel l'apatite phosphosilicatée répond à la formule :
Na_{0,45} Ca_{9,1} Pu_{0,45} (PO₄)_{5,55} (SiO₄)_{0,45} F₂ (III).

4. Bloc selon la revendication 1, dans lequel l'apatite phosphosilicatée répond à la formule :
Ca_{9+z} Gd_{1-2z} Hf_{w} Pu_{z-w} (PO₄)₅ (SiO₄)₁ F₂ (IV)
avec O < z ≤ 0,5 et O ≤ w <z.

5. Bloc selon la revendication 4, dans lequel l'apatite phosphosilicatée répond à la formule :
Ca_{9,46} Gd_{0,08} Pu_{0,46} (PO₄)₅ (SiO₄)₁ F₂ (V).

6. Bloc selon la revendication 1, dans lequel l'apatite phosphosilicatée répond à la formule :
Ca_{10-y-z} Gd_{y} Hf_{w} Pu_{z-w} (PO₄)_{6-2z-y} (SiO₄)_{y+2z} F₂ (VI)
avec 0 < y ≤ 1, 0 < z ≤ 0,5 et O ≤ w <z.

7. Bloc selon la revendication 6, dans lequel l'apatite phosphosilicatée répond à la formule :
Ca_{9,04} Gd_{0,48} Pu_{0,48} (PO₄)_{4,56} (SiO₄)_{1,44} F₂ (VII).

8. Bloc selon la revendication 1, dans lequel l'apatite phosphosilicatée répond à la formule :
Ca_{10-z} Pu_{z} (PO₄)_{6-2z} (SiO₄)_{2z} F₂ (VIII)
avec 0 < z ≤ 0,5.

9. Bloc selon la revendication 8, dans lequel l'apatite phosphosilicatée répond à la formule :
Ca_{9,55} Pu_{0,45} (PO₄)_{5,1} (SiO₄)_{0,9} F₂ (IX).

10. Procédé de préparation d'une apatite phosphosilicatée répondant à la formule suivante :
Mₜ Caₓ Ln_{y} Hf_{w} Pu_{z-w}(PO₄)₆₋ᵤ(Si0₄)ᵤ F₂ (I)
dans laquelle :
- M représente au moins un métal alcalin ;
- Ln représente au moins un cation choisi parmi les lanthanides, et
- t, x, y, z, w et u sont tels que :
0 ≤ t ≤ 1,
8 ≤ x ≤ 10,
0 ≤ y ≤ 1,
0 < z ≤ 0,5,
0 ≤ w < z, et
0 < u < y + 2z,
et que le nombre total de charges positives apportées par les cations Na, Ca, Ln, Hf et Pu soit égal à (20 + u), à partir d'un mélange de poudres comprenant les réactifs suivants : du dioxyde de plutonium, du pyrophosphate de calcium, des composés des différents constituants de l'apatite à préparer et au moins un réactif fluoré, selon lequel on effectue les étapes suivantes :
1) préparation d'un premier mélange de poudres comprenant tous les réactifs à l'exception du (des) réactif(s) fluoré(s) ;
2) addition au premier mélange du (des) réactif(s) fluoré(s) pour obtenir un mélange final de tous les réactifs ;
3) broyage du mélange final à une granulométrie inférieure à 50 µm ;
4) frittage-réaction du mélange final, à une température de 1100 à 1600°C, sous une atmosphère neutre ou réductrice, avec application d'une pression avant ou pendant le frittage.

11. Procédé selon la revendication 10, dans lequel on réalise l'étape 4) de frittage-réaction en effectuant les étapes suivantes :
- a) comprimer le mélange de poudres dans un moule sous une pression de 100 à 500 MPa (1000 à 5000 bars), et
- b) calciner le produit comprimé, sous atmosphère neutre ou réductrice, à la pression atmosphérique, à une température de 1 500 à 1 600°C.

12. Procédé selon la revendication 10, dans lequel on réalise l'étape 4) de frittage-réaction en frittant le mélange de poudres, en atmosphère neutre ou réductrice, sous une pression de 10 à 25 MPa (100 à 250 bars), à une température de 1100 à 1500°C.

13. Procédé selon la revendication 12, dans lequel on réalise, après le frittage sous pression, les étapes complémentaires suivantes :
- c) broyage du produit fritté obtenu,
- d) compactage du produit broyé sous une pression de 100 à 500 MPa (1000 à 5000 bars), et
- e) traitement thermique de recuit du produit compacté, à la pression atmosphérique, sous atmosphère neutre ou réductrice, à une température de 1200 à 1600°C.

14. Procédé selon l'une quelconque des revendications 10 à 13, dans lequel le premier mélange de poudres comprend du carbonate de calcium et on soumet ce premier mélange à un traitement thermique de décomposition du carbonate de calcium, avant d'effectuer l'étape 2).

15. Procédé selon l'une quelconque des revendications 10 à 14, dans lequel le premier mélange de l'étape 1) est préparé en mélangeant les poudres des réactifs dans de l'acétone, puis en évaporant l'acétone et en effectuant un broyage final à une granulométrie inférieure à 50 µm.

16. Procédé selon l'une quelconque des revendications 10 à 15, dans lequel le mélange final de l'étape 2) est effectué en mélangeant les poudres de réactifs dans de l'acétone et en évaporant ensuite l'acétone.

17. Procédé selon l'une quelconque des revendications des revendications 10 à 16, dans lequel le broyage de l'étape 2) est effectué dans de l'eau et est suivi d'un séchage.

18. Procédé selon l'une quelconque des revendications 10 à 17, dans lequel la (les) quantités de réactif(s) fluoré(s) ajouté(s) dans l'étape 2) correspondent aux proportions stoechiométriques nécessaires pour obtenir l'apatite phosphosilicatée de formule (I).

19. Procédé selon l'une quelconque des revendications 10 à 18, dans lequel le pyrophosphate de calcium est du pyrophosphate de calcium β obtenu par calcination d'hydrogénophosphate de calcium anhydre ou dihydraté (CaHPO₄ ou CaPO₄.2H₂O) à environ 1000°C.

20. Procédé selon l'une quelconque des revendications 10 à 19, dans lequel le bioxyde de plutonium est sous forme de poudre ayant une granulométrie moyenne de 2 µm à 50 µm.

## Claims

1. Plutonium confinement block comprising a phosphosilicate apatite matrix containing the plutonium to be confined and any radioactive lanthanides, the plutonium and lanthanides being included in the chemical structure of the phosphosilicate apatite and said apatite complying with the following formula:
Mₜ Caₓ Ln_{y} Hf_{w} Pu_{z-w}(PO₄)₆₋ᵤ(SiO₄)ᵤ F₂ (I)
wherein:
- M represents at least one alkaline metal;
- Ln represents at least one cation selected from the lanthanides, and
- t, x, y, z, w and u are such that:
0 ≤ t ≤ 1,
8 ≤ x ≤ 10,
0 ≤ y ≤ 1,
0 < z ≤ 0.5,
0 ≤ w < z, and
0 < u ≤ y + 2z,
and the total number of positive charges provided by the M, Ca, Ln, Hf and Pu cations are equal to (20 + u).

2. Block according to claim 1, wherein the phosphosilicate apatite complies with the formula:
Na_{z} Ca_{10-2z} Pu_{z} (PO₄)_{6-z} (SiO₄)_{z} F₂ (II)
wherein 0 < z ≤ 0.5.

3. Block according to claim 1, wherein the phosphosilicate apatite complies with the formula:
Na_{0.45} Ca_{9.1} Pu_{0.45} (PO₄)_{5.55} (SiO₄)_{0.45} F₂ (III).

4. Block according to claim 1, wherein the phosphosilicate apatite complies with the formula:
Ca_{9+z} Gd_{1-2z} Hf_{w} Pu_{z-w} (PO₄)₅ (SiO₄)₁ F₂ (IV)
where 0 < z ≤ 0.5 and 0 ≤ w < z.

5. Block according to claim 4, wherein the phosphosilicate apatite complies with the formula:
Ca_{9.46} Gd_{0.08} Pu_{0.46} (PO₄)₅ (SiO₄)₁ F₂ (V).

6. Block according to claim 1, wherein the phosphosilicate apatite complies with the formula:
Ca_{10-y-z} Gd_{y} Hf_{w} Pu_{z-w} (PO₄)_{6-2z-y} (SiO₄)_{y+2z} F₂ (VI)
where 0 < y ≤ 1, 0 < z ≤ 0.5 and 0 ≤ w < z.

7. Block according to claim 6, wherein the phosphosilicate apatite complies with the formula:
Ca_{9.04} Gd_{0.48} Pu_{0.48} (PO₄)_{4.56} (SiO₄)_{1.44} F₂ (VII).

8. Block according to claim 1, wherein the phosphosilicate apatite complies with the formula:
Ca_{10-z} Pu_{z} (PO₄)_{6-2z} (SiO₄)_{2z} F₂ (VIII)
where 0 < z ≤ 0.5.

9. Block according to claim 8, wherein the phosphosilicate apatite complies with the formula:
Ca_{9.55} Pu_{0.45} (PO₄)_{5.1} (SiO₄)_{0.9} F₂ (IX).

10. Method to prepare a phosphosilicate apatite complying with the following formula:
Mₜ Caₓ Ln_{y} Hf_{w} Pu_{z-w}(PO₄)₆₋ᵤ(SiO₄)ᵤ F₂ (I)
wherein:
- M represents an alkaline metal;
- Ln represents at least one cation selected from the lanthanides, and
- t, x, y, z, w and u are such that:
0 ≤ t ≤ 1,
8 ≤ x ≤ 10,
0 ≤ y ≤ 1,
0 < z ≤ 0.5,
0 ≤ w < z, and
0 < u ≤ y + 2z,
and the total number of positive charges provided by the Na, Ca, Ln, Hf and Pu cations are equal to (20 + u), from a mixture of powders comprising the following reagents: plutonium dioxide, calcium pyrophosphate, compounds of the different constituents of the apatite to be prepared and at least one fluorinated reagent, according to which the following steps are carried out:
1) preparation of a first mixture of powders comprising all the reagents except for the fluorinated reagent(s) ;
2) addition of the first mixture of fluorinated reagent(s) to obtain a final mixture of all the reagents;
3) grinding of the final mixture to a particle size of less than 50 µm;
4) sintering-reaction of the final mixture, at a temperature of 1100 to 1600°C, in a neutral or reducing atmosphere, with application of pressure before or during the sintering.

11. Method according to claim 10, wherein the sintering-reaction step 4) is carried out by performing the following steps:
- a) compressing the mixture of powders in a mould under pressure from 100 to 500 MPa (1000 to 5000 bar), and
- b) calcining the compressed product, in a neutral or reducing atmosphere, at atmospheric pressure, at a temperature from 1500 to 1600°C.

12. Method according to claim 10, wherein the sintering-reaction step 4) is carried out by sintering the mixture of powders in a neutral or reducing atmosphere, at a pressure of 10 to 25 MPa (100 to 250 bar), at a temperature of 1100 to 1500°C.

13. Method according to claim 12, wherein the following additional steps are carried out, after the pressurised sintering:
- c) grinding of the sintered product obtained,
- d) compacting of the ground product at a pressure of 100 to 500 MPa (1000 to 5000 bar), and
- e) annealing heat treatment of the compacted product, at atmospheric pressure, in a neutral or reducing atmosphere, at a temperature of 1200 to 1600°C.

14. Method according to any of claims 10 to 13, wherein the first powder mixture comprises calcium carbonate and said first mixture is subjected to a heat treatment to break down the calcium carbonate, before performing step 2).

15. Method according to any of claims 10 to 14, wherein the first mixture of step 1) is prepared by mixing the reagent powders in acetone, and then by evaporating the acetone and performing a final grinding to a particle size of less than 50 µm.

16. Method according to any of claims 10 to 15, wherein the final mixture of step 2) is performed by mixing the reagents powders in acetone and then evaporating the acetone.

17. Method according to any of claims 10 to 16, wherein the grinding of step 2) is performed in water and followed by drying.

18. Method according to any of claims 10 to 17, wherein the quantities of fluorinated reagent(s) added in step 2) correspond to the stoechiometric proportions required to obtain the phosphosilicate apatite according to formula (I).

19. Method according to any of claims 10 to 18, wherein the calcium pyrophosphate is β calcium pyrophosphate obtained by calcining anhydrous or dihydrate calcium hydrogen phosphate (CaHPO₄ or CaPO₄.2H₂O) at approximately 1000°C.

20. Method according to any of claims 10 to 19, wherein the plutonium dioxide is in the form of powder with an average particle size of 2 µm to 50 µm.

## Patentansprüche

1. Block zum Einschließen von Plutonium, der umfasst eine Matrix aus Phosphosilicat-Apatit, die das einzuschließende Plutonium und gegebenenfalls radioaktive Lanthanide enthält, in der das Plutonium und die Lanthaniden in der chemischen Struktur des Phosphosilicat-Apatits eingeschlossen sind, der die folgende Formel hat:
Mₜ Caₓ Ln_{y} Hf_{w} Pu_{z-w}(PO₄)₆₋ᵤ(SiO₄)ᵤ F₂ (I)
worin bedeuten:
- M mindestens ein Alkalimetall;
- Ln mindestens ein Kation, ausgewählt aus den Lanthaniden, und worin
- t, x, y, z, w und u die folgenden Bedeutungen haben:
0 ≤ t ≤ 1,
8 ≤ x ≤ 10,
0 ≤ y ≤ 1,
0 < z ≤ 0,5,
0 ≤ w < z, und
0 < u ≤ y + 2z, und
wobei die Gesamtanzahl der von den Kationen M, Ca, Ln, Hf und Pu getragenen positiven Ladungen (20 + u) beträgt.

2. Block nach Anspruch 1, in dem der Phosphosilicat-Apatit die Formel hat:
Na_{z}Ca_{10-2z} Pu_{z} (PO₄)_{6-z} (SiO₄)_{z} F₂ (II)
worin 0 < z ≤ 0,5.

3. Block nach Anspruch 1, in dem der Phosphosilicat-Apatit die Formel hat:
Na_{0,45} Ca_{9,1} Pu_{0,45} (PO₄)_{5,55} (SiO₄)_{0,45} F₂ (III).

4. Block nach Anspruch 1, in dem der Phosphosilicat-Apatit die Formel hat:
Ca_{9+z} Gd_{1-2z} Hf_{w} Pu_{z-w} (PO₄)₅ (SiO₄)₁ F₂ (IV)
worin 0 < z ≤ 0,5 und 0 ≤ w < z.

5. Block nach Anspruch 4, in dem der Phosphosilicat-Apatit die Formel hat:
Ca_{9,46} Gd_{0,08} Pu_{0,46} (PO₄)₅ (SiO₄)₁ F₂ (V)

6. Block nach Anspruch 1, in dem der Phosphosilicat-Apatit die Formel hat:
Ca_{10-y-z} Gd_{y} Hf_{w} Pu_{z-w} (PO₄)_{6-2z-y} (SiO₄)_{y+2z} F₂ (VI)
worin 0 < y ≤ 1; 0 < z ≤ 0,5 und 0 ≤ w < z.

7. Block nach Anspruch 6, in dem der Phosphosilicat-Apatit die Formel hat:
Ca_{9,04} Gd_{0,48} Pu_{0,48} (PO₄)_{4,56} (SiO₄)_{1,44} F₂ (VII).

8. Block nach Anspruch 1, in dem der Phosphosilicat-Apatit die Formel hat:
Ca_{10-z} Pu_{z} (PO₄)_{6-2z}(SiO₄)_{2z} F₂ (VIII)
worin 0 < z ≤ 0,5.

9. Block nach Anspruch 8, in dem der Phosphosilicat-Apatit die Formel hat:
Ca_{9,55} Pu_{0,45} (PO₄)_{5,1} (SiO₄)_{0,9} F₂ (IX).

10. Verfahren zur Herstellung eines Phosphosilicat-Apatits der folgenden Formel:
Mₜ Caₓ Ln_{y} Hf_{w} Pu_{z-w}(PO₄)₆₋ᵤ (SiO₄)ᵤ F₂ (I)
worin bedeuten:
- M mindestens ein Alkalimetall;
- Ln mindestens ein Kation, ausgewählt aus den Lanthaniden, und worin
- t, x, y, z, w und u die folgenden Bedeutungen haben:
0≤t≤1,
8≤x≤10,
0≤y≤1,
0<z≤0,5,
0≤w<z, und
0<u≤y+2z, und
wobei die Gesamtanzahl der von den Kationen Na, Ca, Ln, Hf und Pu getragenen positiven Ladungen (20 + u) beträgt,
aus einer Pulvermischung, welche die folgenden Reagentien umfasst: Plutoniumdioxid, Calciumpyrophosphat, Verbindungen unterschiedlicher Bestandteile des herzustellenden Apatits und mindestens ein fluoriertes Reagens, bei dem man die folgenden Stufen durchführt:
1) Herstellung einer ersten Pulvermischung, die alle Reagentien mit Ausnahme des (der) fluorierten Reagens (Reagentien) umfasst;
2) Zugabe des (der) fluorierten Reagens (Reagentien) zu der ersten Mischung zur Herstellung einer Endmischung aus allen Reagentien;
3) Mahlen der Endmischung bis auf eine Teilchengröße von < 50 µm;
4) Reaktionssintem der Endmischung bei einer Temperatur von 1100 bis 1600 °C in einer neutralen oder reduzierenden Atmosphäre unter Anwendung eines Druckes vor oder während des Sintems.

11. Verfahren nach Anspruch 10, bei dem man die Reaktionssinter-Stufe (4) unter Anwendung der folgenden Stufen durchführt:
- a) Komprimieren der Pulvermischung in einer Form unter einem Druck von 100 bis 500 MPa (1000 bis 5000 bar) und
- b) Calcinieren des komprimierten Produkts in einer neutralen oder reduzierenden Atmosphäre bei Atmosphärendruck und einer Temperatur von 1500 bis 1600 °C.

12. Verfahren nach Anspruch 10, bei dem man die Reaktionssinter-Stufe (4) durchführt durch Sintern der Pulvermischung in einer neutralen oder reduzierenden Atmosphäre unter einem Druck von 10 bis 25 MPa (100 bis 250 bar), bei einer Temperatur von 1100 bis 1500 °C.

13. Verfahren nach Anspruch 12, bei dem man nach dem Sintern unter Druck die folgenden komplementären Stufen durchführt:
- c) Mahlen des erhaltenen Sinterprodukts,
- d) Verdichten des gemahlenen Produkts unter einem Druck von 100 bis 500 MPa (1000 bis 5000 bar) und
- e) thermisches Glühen des verdichteten Produkts bei Atmosphärendruck in einer neutralen oder reduzierenden Atmosphäre bei einer Temperatur von 1200 bis 1600 °C.

14. Verfahren nach einem der Ansprüche 10 bis 13, bei dem die erste Pulvermischung Calciumcarbonat umfasst und diese erste Mischung einer thermischen Zersetzung des Calciumcarbonats unterzogen wird, bevor die Stufe (2) durchgeführt wird.

15. Verfahren nach einem der Ansprüche 10 bis 14, bei dem die erste Mischung der Stufe (1) hergestellt wird durch Mischen der Reagenspulver in Aceton, anschließendes Verdampfen des Acetons und Durchführung einer Schlussmahlung bis zu einer Teilchengröße von < 50 µm.

16. Verfahren nach einem der Ansprüche 10 bis 15, bei dem die Endmischung der Stufe (2) hergestellt wird durch Mischen der Reagenspulver in Aceton und anschließendes Verdampfen des Acetons.

17. Verfahren nach einem der Ansprüche 10 bis 16, bei dem das Mahlen der Stufe (2) in Wasser durchgeführt wird und anschließend getrocknet wird.

18. Verfahren nach einem der Ansprüche 10 bis 17, bei dem die Menge(n) des (der) in der Stufe (2) zugegebene(n) fluorierte(n) Reagens (Reagentien) den Stöchiometrischen Mengen entsprechen, die erforderlich sind zur Herstellung eines Phosphosilicatapatits der Formel (I).

19. Verfahren nach einem der Ansprüche 10 bis 18, bei dem das Calciumpyrophosphat ß-Calciumpyrophosphat ist, das durch Calcinieren von wasserfreiem Calciumhydrogenphosphat oder -dihydrat (CaHPO₄ oder CaPO₄.2H₂O) bei etwa 1000 °C hergestellt wurde.

20. Verfahren nach einem der Ansprüche 10 bis 19, bei dem das Plutoniumdioxid in Form eines Pulvers mit einer mittleren Korngröße von 2 bis 50 µm vorliegt.
